# EUROPEAN PATENT APPLICATION

(11) **EP 4 273 766 A1**
(43) Date of publication of application: **08.11.2023**
(21) Application number: 22215433.8
(22) Date of filing: 21.12.2022
(51) Int. Cl.: G06Q 10/00, G06Q 10/06, G06Q 10/063, G06Q 10/0631, G06Q 10/0637, G06Q 10/067

(54) **SEMI-AUTOMATIC SYSTEM AND METHOD FOR SOCIO-TECHNICAL SYSTEM SERVICE DESIGN AT SCALE**

(30) Priority: 06.05.2022 IN 202221026480
(71) Applicant: Tata Consultancy Services Limited, Maharashtra (IN)
(72) Inventor: DOKE, Pankaj, 400601 Thane (West) - Maharashtra (IN); BHAVSAR, Karan Rajesh, 400601 Thane (West) - Maharashtra (IN); SRIVASTAVA, Akhilesh Chandra, 400601 Thane (West) - Maharashtra (IN); KIMBAHUNE, Sanjay, 400601 Thane (West) - Maharashtra (IN); SHINDE, Sujit Raghunath, 400601 Thane (West) - Maharashtra (IN); PAPPULA, Srinivasu, 500081 Hyderabad - Telangana (IN)
(74) Representative: Goddar, Heinz J.

(57) **Abstract**

Socio-technical system (STS) service design is an approach to design that consider human, social and organizational factors, as well as technical factors. Due to the nature of STS, any human effort will have challenges in terms of time and resource constraints in such a scenario. A method and system for designing the STS service at scale has been provided. The present disclosure is configured to bring efficiency in terms of time taken and efficacy in terms of dimensions covered. The system uses machine learning methods and natural language processing to aid the rapid process transformation of design thinking for STS. The system is using machine intervention for dimensionality reduction, helps in giving a weighted approach towards goal achievement irrespective of human biases. The prototype is expressed in a commonly understandable human language helping in prototype evaluation - visualizing the prototype even before it is built.

## Description

### CROSS-REFERENCE TO RELATED APPLICATIONS AND PRIORITY

The present application claims priority to Indian application no. 202221026480, filed on May 6, 2022.

### TECHNICAL FIELD

The disclosure herein generally relates to the field of service design, and, more particularly, to a method and system for designing of a socio-technical system (STS) service at scale.

### BACKGROUND

Socio-technical systems (STS) in an organizational development is an approach to achieve complex organizational work design that recognizes the interaction between people and technology in workplaces. STS service is an approach to design that consider human, social and organizational factors, as well as technical factors. The basis of STS is general systems theory, which describes what the disciplines of science have in common. In general systems theory, no discipline has a monopoly on science-all are valid.

The understanding of STS can contribute to the design of organizational structures, business processes and technical systems. Even though many people realize that socio-technical issues are important, socio-technical design methods are rarely used. It is suspected that the reasons for their lack of use are, primarily, difficulties in using the methods and the disconnect between these methods and both technical engineering issues, and issues of individual interaction with technical systems.

The development of STS service design methods has identified and attempted to address real problems in understanding and developing complex organizational systems which, nowadays, inevitably rely on large-scale software-intensive systems. Despite positive experiences in demonstrator projects, however, these methods have not had any significant impact on industrial software engineering practice.

STS design is typically done by humans and designer skilled in policy and systems analysis - hence the use of machine learning and natural language processing techniques is not a familiar approach. Existing physical and technological mechanism for service design using design thinking by a cross functional team are found to be inadequate for computer supported collaborative work (CSCW) - due to different interpretation of the design thinking process by individual of a cross-functional team (CFT). This is due to challenges in doing the 'divergence-convergence' stage wherein the members of CFT are in different time zones and distance/space zones and non-shared computing setup. The factor is compounded when the system is - by definition- for a large scale like India and many dimensional. Thus, to arrive at an optimal design thinking based approach or solution in a time bound manner is a challenge.

### SUMMARY

Embodiments of the present disclosure present technological improvements as solutions to one or more of the above-mentioned technical problems recognized by the inventors in conventional systems. For example, in one embodiment, a system for designing of a socio-technical system (STS) service at scale. The system comprises an input/output interface, a memory and one or more hardware processors. The input/ output interface receives a plurality of objectives and goals of the STS service as an input. The one or more processor is in communication with the memory, wherein the one or more first hardware processors are configured to execute programmed instructions stored in the one or more first memories, to: assemble a cross-functional team (CFT) of a plurality of members, wherein each member is selected based on a plurality of dimensions required for achieving the plurality of objectives and goals of the STS service; submit a report by each member of the CFT, wherein the report comprises a plurality of design points under each dimension of the plurality of dimensions as articulated and to be discovered in the plurality of objectives and goals; consolidate the reports from each member to make a final report for each dimension of the plurality of dimensions; find one or more new dimensions using a thematic analysis technique and adding the corresponding one or more reports of the one or more new dimensions in the final report; assess the one or more new dimensions iteratively by a set of CFTs, wherein assessing results in generation of a final text corpus comprising the plurality of dimensions merged with one or more new dimensions, and corresponding final reports; perform a weighted average mechanism of voting on the final text corpus, wherein each CFT upvotes or downvotes the dimensions and the final reports, wherein the voting results in the generation of a multidimensional space representation of the STS service with graded axes and vector representing the inputs from each member of the CFT; reduce the plurality of dimensions using a principal component analysis for optimizing the STS service; review and approve the reduced plurality of dimensions by the plurality of members of the CFT using the weighted average mechanism of voting; process the reduced plurality of dimensions using a multivariate regression algorithm to arrive at a set of three candidate solutions, wherein the set of three candidate solutions is represented as multivariate linear equations, wherein unit vectors and coefficients of the multivariate linear equations indicate the optimal dimensions to design the STS services; and utilize the set of three candidate solutions to provide a service design blue print as an output using a pre-generated pattern language graph.

In another aspect, a method for designing a socio-technical system (STS) service at scale is provided. Initially, a plurality of objectives and goals of the STS service are received as an input. Further a cross-functional team (CFT) of a plurality of members is assembled, wherein each member is selected based on a plurality of dimensions required for achieving the plurality of objectives and goals of the STS service. In the next step, a report is then submitted by each member of the CFT, wherein the report comprises a plurality of design points under each dimension of the plurality of dimensions as articulated and to be discovered in the plurality of objectives and goals. The reports from each members are then consolidated to make a final report for each dimension of the plurality of dimensions. Further, one or more new dimensions are found using a thematic analysis technique and adding the corresponding one or more reports of the one or more new dimensions in the final report. In the next step, the one or more new dimensions are assessed iteratively by a set of CFTs, wherein assessing results in generation of a final text corpus comprising the plurality of dimensions merged with one or more new dimensions, and corresponding final reports. Further, a weighted average mechanism of voting is performed on the final text corpus, wherein each CFT upvotes or downvotes the dimensions and the final reports, wherein the voting results in the generation of a multidimensional space representation of the STS service with graded axes and vector representing the inputs from each member of the CFT. IN the next step, the plurality of dimensions is reduced using a principal component analysis for optimizing the STS service. Further, the reduced plurality of dimensions is reviewed and approved by the plurality of members of the CFT using the weighted average mechanism of voting. The reduced plurality of dimensions is then processed using a multivariate regression algorithm to arrive at a set of three candidate solutions, wherein the set of three candidate solutions is represented as multivariate linear equations, wherein unit vectors and coefficients of the multivariate linear equations indicate the optimal dimensions to design the STS services. And finally, the set of three candidate solutions is utilized to provide a service design blue print as an output using a pre-generated pattern language graph.

In yet another aspect, one or more non-transitory machine-readable information storage mediums comprising one or more instructions which when executed by one or more hardware processors cause designing a socio-technical system (STS) service at scale. Initially, a plurality of objectives and goals of the STS service are received as an input. Further a cross-functional team (CFT) of a plurality of members is assembled, wherein each member is selected based on a plurality of dimensions required for achieving the plurality of objectives and goals of the STS service. In the next step, a report is then submitted by each member of the CFT, wherein the report comprises a plurality of design points under each dimension of the plurality of dimensions as articulated and to be discovered in the plurality of objectives and goals. The reports from each members are then consolidated to make a final report for each dimension of the plurality of dimensions. Further, one or more new dimensions are found using a thematic analysis technique and adding the corresponding one or more reports of the one or more new dimensions in the final report. In the next step, the one or more new dimensions are assessed iteratively by a set of CFTs, wherein assessing results in generation of a final text corpus comprising the plurality of dimensions merged with one or more new dimensions, and corresponding final reports. Further, a weighted average mechanism of voting is performed on the final text corpus, wherein each CFT upvotes or downvotes the dimensions and the final reports, wherein the voting results in the generation of a multidimensional space representation of the STS service with graded axes and vector representing the inputs from each member of the CFT. IN the next step, the plurality of dimensions is reduced using a principal component analysis for optimizing the STS service. Further, the reduced plurality of dimensions is reviewed and approved by the plurality of members of the CFT using the weighted average mechanism of voting. The reduced plurality of dimensions is then processed using a multivariate regression algorithm to arrive at a set of three candidate solutions, wherein the set of three candidate solutions is represented as multivariate linear equations, wherein unit vectors and coefficients of the multivariate linear equations indicate the optimal dimensions to design the STS services. And finally, the set of three candidate solutions is utilized to provide a service design blue print as an output using a pre-generated pattern language graph.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for designing a socio-technical system (STS) service at scale according to some embodiments of the present disclosure.
FIG. 2 is a schematic representation of the system of FIG. 1 for designing a socio-technical system (STS) service at scale according to some embodiments of the present disclosure.
Fig. 3A-3B is a flowchart showing steps involved in the method for designing a socio-technical system (STS) service at scale according to some embodiments of the present disclosure.
FIG. 4A-4B is a flowchart of an example scenario of the system for designing the STS service at scale according to an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Socio-technical system (STS) service design is an approach to design that consider human, social and organizational factors, as well as technical factors. The development of STS service has identified and attempted to address real problems in understanding and developing complex organizational systems which, nowadays, inevitably rely on large-scale software-intensive systems. Despite positive experiences in demonstrator projects, however, these methods have not had any significant impact on industrial software engineering practice.

Further, the primary objective of an STS using design thinking is to quickly synthesize or propose the synthesis of at least three prototypes which address the problem statement and its dimensions and can be evaluated for pilot. Since STS are fairly complex, rollout without appropriate due diligence results in failures which are typically in the range of 90 plus percent. As due to the nature of STS, any human effort will have challenges in terms of time and resource constraints in such a scenario.

One of the biggest challenges of the existing STS service design methods is a large number of cross functional teams (CFT) working together on a scale project. This brings the sheer number of dimensions into the design process. A system which can address all the aspect on all these dimensions is very challenging to build. However, it is the basic problem of any human based CFT that dimensionality reduction or optimization is inherently a political and resource battleground. Those stakeholders who have influence or are in a position of power, would shepherd support for the dimensions which they deem important - and those with less support would be at the receiving end of the stick. And there is no easy way to reduce this imbalance without appeal to power.

Further, even when humans are involved in dimensionality reduction/selection - it is quite a humongous task which relies on the tacit knowledge and experience of the CFT. Sometimes, this knowledge is action oriented or recommendation oriented and does not have the expression power of causality or attribution. And since the system is complex, they have a little handle/clue/visibility on the second and third order effects. All of this, hence costs more in terms of elapsed time or cost of production.

One of the key process sub-segments in design thinking is of divergence and convergence. Many a times, people have misunderstood the concept, and this gets reduced from an engineering exercise to a creative exercise - primarily because people do not have the appropriate context for use of design thinking, the interpretation of the word' thinking' and the contribution of the word 'design' to thinking. Hence, unless the observer or the recipient of the artefact is able to assess the deliverables, the synthesis process is in question. Also, due to the role of humans and the structures that they bring in - the process modeling is severely compromised. While this being one part of the story, the other part is that even though there are people who know the process, the context constrains them with time and resources to adequately analyze the dimensions of the data submitted to enable them to add or explore the dimensions inferred from the CFT submissions and then subsequently prune them to have adequate representation of the problem space. Thus, viewed from both these angles, there needs a machine guided process which ensures that deviations or misunderstanding are minimized and there is machine aid for the analytical aid in the given time and resource budgets.

The present disclosure provides a method and system for designing a socio-technical system (STS) service at scale. The present disclosure addresses the problems of prior art with the use of automation to bring efficiency in terms of time taken and efficacy in terms of dimensions covered so that maximal benefits, within reason, can be addressed from the first iteration of the STS service design. The present disclosure uses machine learning methods and natural language processing (NLP) to aid the rapid process transformation of design thinking for socio-technical system (STS).

In the present disclosure, the algorithmic components take away the agency from the humans in the CFT and assign it to the system. This devolvement of agency to algorithmic measures shifts the goal post from socio-economic-political axis into the domain of data driven and scientific axis - thereby up giving a better shot at the balancing of the dimensions. The disclosure is configured to use automated algorithmic systems. With the use of automated algorithmic systems, the attribute of the dimensions to outcomes is traceable and also with the use of pattern language based expression - a proof of prototype - with lower costs of construction helps the stakeholders visualize the offerings in much lower time and costs. Further, the algorithmic systems allow itself for scientific scrutiny and bias correction in a more auditable way within the frameworks of governance.

The process of divergence-convergence in design thinking across CFTs relies heavily on skilled practitioners so that the process integrity is not compromised. Since it is carried out by humans and has issues in human based structures and relationships, apart from the operational challenges of the CFT such as different time zones, different languages, different culturally acceptable ways of expressing. Hence the present disclosure is using machine learning approaches to speed up the process. For example - using NLP techniques language gaps are addressed, using thematic analysis cultural uses of languages are flattened to expose the underlying themes for analysis than the expressive power of language. Such a ML approach to language processing and media processing, surfaces dimensions helps in divergence with an accelerated pace as compared to a human being. On the other hand, use of machine intervention for dimensionality reduction, helps in giving a weighted approach towards goal achievement irrespective of human biases or power structures. Thus, a base structure of the convergent process is machine processed which is then embellished by the humans in the CFT or process in charge to further process it. This significantly reduces time and resource requirement as compared to manual approaches.

Typically, the prototype count of three is very difficult for humans to synthesize. These issues are primarily due to the cognitive load induced by the complexity of the STS and the dimensions it addresses. Efficient distribution of dimensions across the prototypes is skill and art. If the dimensions are not appropriately distributed, then the prototype evaluation is not proper comparison. It is only if the dimensions are appropriately distributed then comparison is helpful. Secondly, once the prototypes are conceptualized it is difficult for the CFT to build them in a commonly understood language or medium of expression - so that the prototype expresses what the term CFT has in their mind and their analysis is in terms of this commonly understood expressed language. Natural language such as English or regional languages do not lend themselves to such structural analysis and volumes of text or paper do not do justice to visualization and understanding of such a complex STS - hence expressing the prototype in a common language is of paramount importance from an efficient perspective of prototype synthesis, analysis and evaluation. The present disclosure expresses the prototype in a commonly understandable human language such as English (subset) but with a structure which lends itself to machine expression and analysis. This helps in prototype evaluation - visualizing the prototype even before it is built - the cost estimate of it. Similarly, in the initial divergence convergence phase when inputs from the CFT across Geography or Unit is collated in text, media format - it is very difficult for humans to have to sift through it and surface the underlying structures. The present disclosure helps in speeding up the entire system towards this use of NLP techniques and saving crucial time for the team.

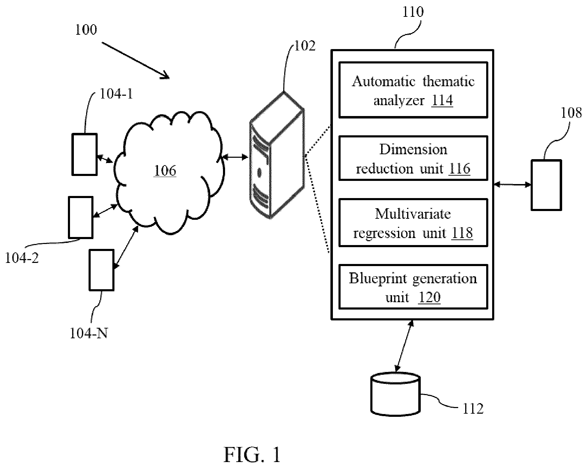

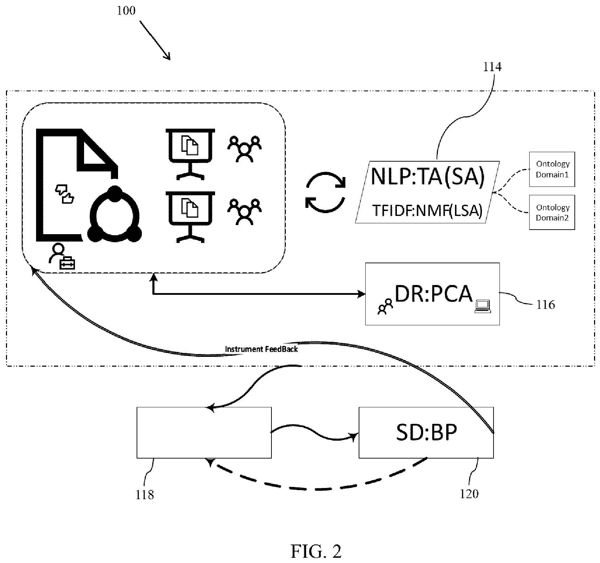

Referring now to the drawings, and more particularly to FIG. 1 through FIG. 4B, where similar reference characters denote corresponding features consistently throughout the figures, there are shown preferred embodiments and these embodiments are described in the context of the following exemplary system and/or method.

According to an embodiment of the disclosure, FIG. 1 illustrates a block diagram of a system 100 for designing a socio-technical system (STS) service at scale. For the sake of clarity, the terms "STS service" or "STS" or "socio-technical system" are interchangeable in the present disclosure. It may be understood that the system 100 comprises one or more computing devices 102, such as a laptop computer, a desktop computer, a notebook, a workstation, a cloud-based computing environment and the like. It will be understood that the system 100 may be accessed through one or more input/output interfaces 104-1, 104-2..., collectively referred to as I/O interface 104 or user interface 104. Examples of the I/O interface 104 may include, but are not limited to, a user interface, a portable computer, a personal digital assistant, a handheld device, a smartphone, a tablet computer, a workstation and the like. The I/O interface 104 are communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 may be implemented in a workstation, a mainframe computer, a server, and a network server. In an embodiment, the computing device 102 further comprises one or more hardware processors 108, one or more memory 110, hereinafter referred as a memory 110 and a data repository 112, for example, a repository 112. The memory 110 is in communication with the one or more hardware processors 108, wherein the one or more hardware processors 108 are configured to execute programmed instructions stored in the memory 110, to perform various functions as explained in the later part of the disclosure. The repository 112 may store data processed, received, and generated by the system 100. The memory 110 further comprises a plurality of units for performing various functions. The plurality of units comprises an automatic thematic analyzer 114, a dimension reduction unit 116, a multivariate regression unit 118, a blueprint generation unit 120.

The system 100 supports various connectivity options such as BLUETOOTH9, USB, ZigBee and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. The components and functionalities of the system 100 are described further in detail.

According to an embodiment of the disclosure, the system 100 is configured to receive a plurality of objectives and goals of the STS service as an input, via the I/O interface 104. Any large scale STS begins with a brief of the plurality of objectives and goals of the STS service for the intended users (customers/client) of an organization.

According to an embodiment of the disclosure, the system 100 is further configured to assemble, a cross-functional team (CFT) of a plurality of members from the organization, wherein each member is selected based on a plurality of dimensions required for achieving the plurality of objectives and goals of the STS service. Once the plurality or objectives and goals are articulated, stakeholders are notified. The objectives and goals are nominated based on dimensions or attributes deemed important for the success of the organization. The CFT are typically constituted at the country/ headquarter (HQ) level as well as at the geography/ unit/ state/ jurisdiction level. People from the headquarter represents people who are in the higher management and have an overall view. Such a dual composition helps in 2 aspects - a consolidated macro views of things as well as a micro-level, on ground view of things. Hence - it is both top-downs well as bottom up. From success point of view - for any STS design - it is very critical that it be a bottom up design - since the primary users of the STS service are at the bottom level. However, from a management or strategic or long term view, the top down view is also important since there are dimensions of the STS service which the stakeholders and the sponsors are aware of - which the users may not be aware of. The top down view is typically a long term view with also a strategic dimension to it. The bottom up view - is mostly a transactional and relationship based view of things.

Each member of the CFT is required to submit a report. The report comprises a plurality of design points under each dimension of the plurality of dimensions as articulated and to be discovered in the plurality of objectives and goals. The report is then consolidated, to make a final report for each dimension of the plurality of dimensions, via the one or more hardware processors. Thus, the STS service design begins with a charted dimensions - shared with the composed CFT teams (across geographies) - with a central agency (HQ) addressing the macro view. The CFT teams capture their inputs (advice, comments, solution, problem, guidance, requirements) under each dimension as articulated into the requirements. For each dimension (D(i)) (1<= i <= N) a report N(i) is submitted by the team member TM(ik) belonging to the CFT (CFT(i)). Hence for all geographies G(z), a summative text corpus or the final report is generated. The final report consisting of dimension with data elements of the report across all the CFT and all geographies. This data is captured in a multiple document interface (MDI), where each document is mapped to the CFT.

According to an embodiment of the disclosure, the system 100 comprises the automatic thematic analyzer 114. The automatic thematic analyzer 114 is configured to find one or more new dimensions using a thematic analysis technique and add the corresponding one or more reports of the one or more new dimensions in the final report. The automatic thematic analyzer 114 uses natural language processing (NLP) methods of latent semantic analysis (LSA) and "TF-IDF" or "TD-IDF" or "term frequency-inverse document frequency" to analyze the reports submitted by each team member of the participating CFT to propose one or more new unconsidered dimensions (ND (1<=j<=n)). The TF-IDF is a weighting scheme commonly used to represent textual documents as vectors (for purposes of classification, clustering, visualization, retrieval, etc.). In other words, the method assigns a weight to each word based on its occurrence frequency in the text with respect to the text corpus.

According to an embodiment of the disclosure, a few members of the CFT then assess the one or more new dimensions iteratively. The assessing results in generation of a final text corpus comprising the plurality of dimensions merged with one or more new dimensions, and corresponding final reports. Thus, the final text corpus is now a collection of D(i) and ND(j). These one or more new dimensions are then auto populated into a shared document (SD) - and a trigged is auto generated to the set of CFTs to give their inputs on the ND(j). The CFT is also requested to assess the appropriated of any movement of the report from one dimension to another dimension, i.e., if the system's view of restricted report mapping to a particular dimension is okay with the CFT.

This process of transforming old dimension to the one or more newer dimensions is recursive/ reiterated so that there is a mutually agreed upon set of dimensions (which has now subsumed one or more new dimensions) and the final text corpus N (as mapped to one or more dimensions). In case of any disagreement, arbitration is performed by the team at HQ. The output of this is the final text corpus which is a consolidated machine structured Dimensioned document for all the CFT inputs.

The system 100 is further configured to perform the weighted average mechanism of voting on the final text corpus. Each member of the CFT upvotes or downvotes the dimensions and their corresponding reports, wherein the voting results in the generation of a multidimensional space representation of the STS service with graded axes and vector representing the inputs from each member of the CFT. The weighted average mechanism of voting is done by the members of CFT and the HQ team. The HQ team has a unit weight higher than each of the CFT members (which are unit weights) irrespective of their size of resources (to have an equitable representation - no dominance of one by the other). In this stage, each CFT up votes or down votes the dimensions set and the reports. Each dimension now has an axes - with each report have lower weight closer to the center of the multi-dimension space and each higher weight report away from the center of this multidimension space of the dimension. Thus, the multidimensional space representation of the STS service comprises graded axes - with vector in the space - representing the inputs from each CFT. This space then serves as the input to the next algorithmic process of dimensionality reduction.

In STS - the first S is for social, involving human and the collective. When this collective comes together in the presence of technology in the system many factors emerge. When the pair of a single human and technology is considered - it gives human factors in the technology. This gives rises to aspects like affordances. Various factors such as age, gender, economic status, technology acceptance, social structures, power structures, cultural aspects etc., are the "Dimensions" of the STS. It is very challenging to address all of these. There is always a tradeoff, this 'balancing' comes from design point of view. Thus, STS has multidimensional space - each axes represents a dimension. A given instance of STS is represented in this space as a vector.

According to an embodiment of the disclosure, the system 100 comprises the dimension reduction unit 116. The dimension reduction unit 116 is configured to reduce the plurality of dimensions using a principal component analysis (PCA) for optimizing the STS service design. Thus, the new set of dimensions represented with a reduced dimensions are without loss of reasonable fidelity. The plurality of members of the CFT then reviews and approves the reduced plurality of dimensions using the weighted average mechanism of voting. The dimension reduction unit 116 analyses all the dimensions to recommend dimensions which offer similar efficacy with lesser usage of resources.

According to an embodiment of the disclosure, the system 100 comprises the multivariate regression unit 118. The multivariate regression unit 118 is configured to process the reduced plurality of dimensions using a multivariate regression algorithm (MVA) to arrive at a set of three candidate solutions. The set of three candidate solutions is represented as multivariate linear equations, wherein unit vectors and coefficients of the multivariate linear equations indicate the optimal dimensions to design the STS service. The set of three multivariate linear equations whose unit vectors and coefficients indicate the most optimal dimensions to target in the current iteration of the STS rollout and the weightage (indicative of resource allocation) which could be a good candidate prototype for the organization. The output of multivariate regression unit 118 is a set of three vectors in an extensible markup language (XML) or extensible stylesheet language transformation (XSLT) format.

According to an embodiment of the disclosure, the system 100 comprises the blueprint generation unit 120. The blueprint generation unit 120 is configured to utilize the set of three candidate solutions to provide a service design (SD) blueprint (BP) as an output using a pattern language graph. The blueprint generation unit 120 triggers the synthesis of the service design (SD) form based on the dimensions and weights as accorded by the multi-variate analysis. The blueprint generation unit 120 uses the set of three candidate solutions to navigate the pattern language graph and automatically synthesize XML structures depicting the SD BP. The vector in the output XML - provides a navigational entry point in the graph traversal to automatically synthesize a prototypical description of the STS service in XML as well as with exemplars which the human in the HQ and CFT can consider as a proposed manifestation of the STS service.

The pattern language graph is designed by a team of design experts. The team of design experts investigate the various existing or old services and then contemplate, analyze and derive insights into the solution to the problem and capture it as a pattern. These patterns are then connected to each other as linkages to design the pattern language graph.

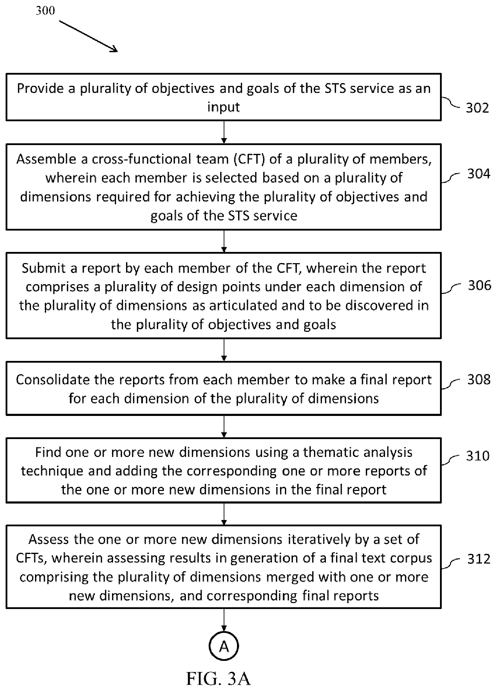

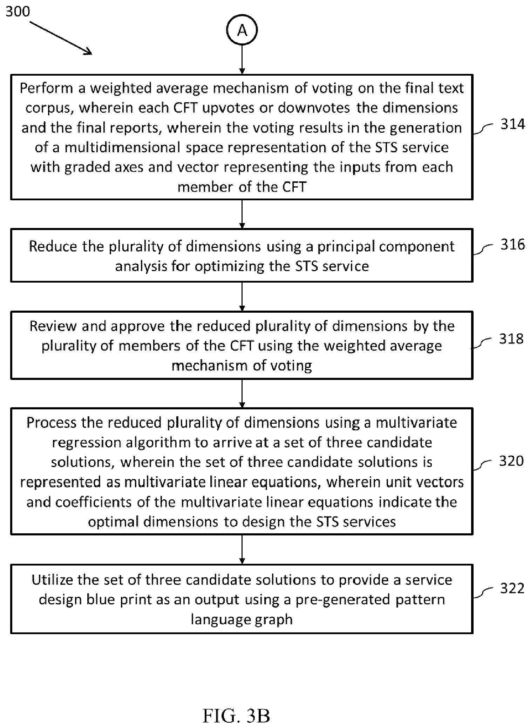

FIG. 3A-3B illustrates a flow chart of a method 300 for designing a socio-technical system (STS) service at scale, in accordance with an example embodiment of the present disclosure. The method 300 depicted in the flow chart may be executed by a system, for example, the system 100 of FIG. 1. In an example embodiment, the system 100 may be embodied in the computing device.

Operations of the flowchart, and combinations of operations in the flowchart, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of a system and executed by at least one processor in the system. Any such computer program instructions may be loaded onto a computer or other programmable system (for example, hardware) to produce a machine, such that the resulting computer or other programmable system embody means for implementing the operations specified in the flowchart. It will be noted herein that the operations of the method 300 are described with help of system 100. However, the operations of the method 300 can be described and/or practiced by using any other system.

Initially at step 302 of the method 300, a plurality of objectives and goals of the STS service are provided as an input. Further at step 304, the cross-functional team (CFT) of a plurality of members is assembled, wherein each member is selected based on a plurality of dimensions required for achieving the plurality of objectives and goals of the STS service. In the next step 306, a report is submitted by each member of the CFT, wherein the report comprises a plurality of design points under each dimension of the plurality of dimensions as articulated and to be discovered in the plurality of objectives and goals.

At step 308 of the method 300, the reports are consolidated from each member to make a final report for each dimension of the plurality of dimensions. Further at step 310, one or more new dimensions are found using the thematic analysis technique and adding the corresponding one or more reports of the one or more new dimensions in the final report.

Further at step 312, the one or more new dimensions are iteratively assessed by a set of CFTs, wherein assessing results in generation of a final text corpus comprising the plurality of dimensions merged with one or more new dimensions, and corresponding final reports. At step 314, the weighted average mechanism of voting is performed on the final text corpus, wherein each CFT upvotes or downvotes the dimensions and the final reports, wherein the voting results in the generation of a multidimensional space representation of the STS service with graded axes and vector representing the inputs from each member of the CFT. In the next step 316, the plurality of dimensions is reduced using the principal component analysis for optimizing the STS service.

Further at step 318, the reduced plurality of dimensions is reviewed and approved by the plurality of members of the CFT using the weighted average mechanism of voting. At step 320, the reduced plurality of dimensions is then processed using the multivariate regression algorithm to arrive at the set of three candidate solutions, wherein the set of three candidate solutions is represented as multivariate linear equations, wherein unit vectors and coefficients of the multivariate linear equations indicate the optimal dimensions to design the STS services. And finally, at step 322, the set of three candidate solutions is utilized to provide a service design blue print as an output using a pattern language graph.

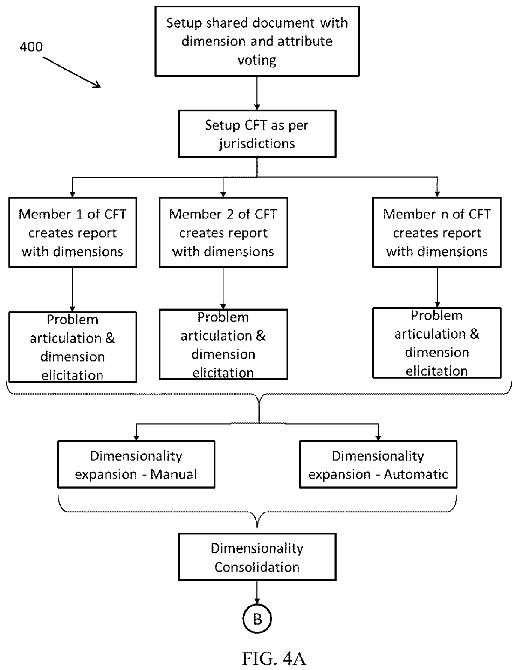

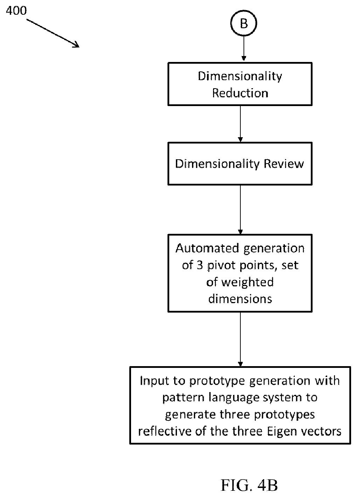

The system 100 can also be explained with the help of a scenario as shown in the flowchart 400 of FIG. 4A-4B. Consider an STS design problem which involves N CFT members - CFT01, CFT02, CFT03 to CFT0N. Each CFT(n) maps to a Geography G(n) in a 1:1 correspondence. Each CFT(i) has a set of Personnel P(j) {1<=j<=K} who contributes to the team. Each CFT(i) also generates a set of artefacts or reports A(k) {1<=k<=M}. Each A(k) can be of any media - audio, image, video, text. All non-text media have associated hashtag H(p) arrived using content analysis. These are human reviewed to remove any noise or discrepancies.

Further consider an instance of service S(i) mapped to healthcare domain, for example, a vaccination which needs to be synthesized with the objective of providing it as a service to all human populations of a geography/country with a goal of 100 percent vaccination. Thus, this covers the aspect of service synthesis, technology based touch points and interaction points and social systems concerning the populace of the geography/country. Further let HQ denote the central node for monitoring, administration and provisioning of resourced to deliver and execute the services, technologies, resources etc.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem related to different interpretation of the design thinking process by individual of a CFT. Further achieving optimal design thinking based approach or solution in a time bound manner is a challenge. The embodiment thus provides a method and a system for designing a socio-technical system (STS) service at scale.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) for designing a socio-technical system (STS) service at scale, the method comprising:
receiving, via one or more hardware processors, a plurality of objectives and goals of the STS service as an input (302);
assembling, via the one or more hardware processors, a cross-functional team (CFT) of a plurality of members, wherein each member is selected based on a plurality of dimensions required for achieving the plurality of objectives and goals of the STS service (304);
submitting, via the one or more hardware processors, a report by each member of the CFT, wherein the report comprises a plurality of design points under each dimension of the plurality of dimensions as articulated and to be discovered in the plurality of objectives and goals (306);
consolidating, via the one or more hardware processors, the reports from each member to make a final report for each dimension of the plurality of dimensions (308);
finding, via the one or more hardware processors, one or more new dimensions using a thematic analysis technique and adding the corresponding one or more reports of the one or more new dimensions in the final report (310);
assessing, via the one or more hardware processors, the one or more new dimensions iteratively by a set of CFTs, wherein assessing results in generation of a final text corpus comprising the plurality of dimensions merged with one or more new dimensions, and corresponding final reports (312);
performing, via the one or more hardware processors, a weighted average mechanism of voting on the final text corpus, wherein each CFT upvotes or downvotes the dimensions and the final reports, wherein the voting results in the generation of a multidimensional space representation of the STS service with graded axes and vector representing the inputs from each member of the CFT (314);
reducing, via the one or more hardware processors, the plurality of dimensions using a principal component analysis for optimizing the STS service (316);
reviewing and approving, via the one or more hardware processors, the reduced plurality of dimensions by the plurality of members of the CFT using the weighted average mechanism of voting (318);
processing, via the one or more hardware processors, the reduced plurality of dimensions using a multivariate regression algorithm to arrive at a set of three candidate solutions, wherein the set of three candidate solutions is represented as multivariate linear equations, wherein unit vectors and coefficients of the multivariate linear equations indicate the optimal dimensions to design the STS services (320); and
utilizing, via the one or more hardware processors, the set of three candidate solutions to provide a service design blue print as an output using a pre-generated pattern language graph (322).

2. The processor implemented method of claim 1, wherein the multivariate linear equations are vectors in an extensible markup language (XML) or extensible stylesheet language transformation (XSLT) format.

3. The processor implemented method of claim 1 wherein the CFT is constituted at a macro level and at a micro level.

4. The processor implemented method of claim 1, wherein the plurality of design points comprises one or more of advices, comments, solutions, problems, guidance or requirements.

5. The processor implemented method of claim 1, wherein the pattern language graph is generated by connecting a plurality of patterns derived from a plurality of existing service designs.

6. The processor implemented method of claim 1, wherein the plurality of members of the CFT is located a plurality of different geographical locations.

7. The processor implemented method of claim 1, wherein the thematic analysis technique is a term frequency-inverse document frequency - latent semantic analysis (TFIDF-LSA).

8. A system (100) for designing of a socio-technical system (STS) service at scale, the system comprises:
an input/ output interface (104) configured to receive a plurality of objectives and goals of the STS service as an input;
a memory (110); and
one or more hardware processor (108) in communication with the memory, wherein the one or more first hardware processors are configured to execute programmed instructions stored in the one or more first memories, to:
assemble a cross-functional team (CFT) of a plurality of members, wherein each member is selected based on a plurality of dimensions required for achieving the plurality of objectives and goals of the STS service;
submit a report by each member of the CFT, wherein the report comprises a plurality of design points under each dimension of the plurality of dimensions as articulated and to be discovered in the plurality of objectives and goals;
consolidate the reports from each member to make a final report for each dimension of the plurality of dimensions;
find one or more new dimensions using a thematic analysis technique and adding the corresponding one or more reports of the one or more new dimensions in the final report;
assess the one or more new dimensions iteratively by a set of CFTs, wherein assessing results in generation of a final text corpus comprising the plurality of dimensions merged with one or more new dimensions, and corresponding final reports;
perform a weighted average mechanism of voting on the final text corpus, wherein each CFT upvotes or downvotes the dimensions and the final reports, wherein the voting results in the generation of a multidimensional space representation of the STS service with graded axes and vector representing the inputs from each member of the CFT;
reduce the plurality of dimensions using a principal component analysis for optimizing the STS service;
review and approve the reduced plurality of dimensions by the plurality of members of the CFT using the weighted average mechanism of voting;
process the reduced plurality of dimensions using a multivariate regression algorithm to arrive at a set of three candidate solutions, wherein the set of three candidate solutions is represented as multivariate linear equations, wherein unit vectors and coefficients of the multivariate linear equations indicate the optimal dimensions to design the STS services; and
utilize the set of three candidate solutions to provide a service design blue print as an output using a pre-generated pattern language graph.

9. The system of claim 8, wherein the multivariate linear equations are vectors in an extensible markup language (XML) or extensible stylesheet language transformation (XSLT) format.

10. The system of claim 8, wherein the CFT is constituted at a macro level and a micro level.

11. The system of claim 8, wherein the plurality of design points comprises one or more of advices, comments, solutions, problems, guidance or requirements.

12. The system of claim 8, wherein the pattern language graph is generated by connecting a plurality of patterns derived from a plurality of existing service designs.

13. The system of claim 8, wherein the plurality of members of the CFT is located a plurality of different geographical locations.

14. The system of claim 8, wherein the thematic analysis technique is a term frequency-inverse document frequency - latent semantic analysis (TFIDF-LSA).

15. One or more non-transitory machine-readable information storage mediums comprising one or more instructions which when executed by one or more hardware processors cause:
receiving, a plurality of objectives and goals of the STS service as an input;
assembling, a cross-functional team (CFT) of a plurality of members, wherein each member is selected based on a plurality of dimensions required for achieving the plurality of objectives and goals of the STS service;
submitting, a report by each member of the CFT, wherein the report comprises a plurality of design points under each dimension of the plurality of dimensions as articulated and to be discovered in the plurality of objectives and goals;
consolidating, the reports from each member to make a final report for each dimension of the plurality of dimensions;
finding, one or more new dimensions using a thematic analysis technique and adding the corresponding one or more reports of the one or more new dimensions in the final report;
assessing, the one or more new dimensions iteratively by a set of CFTs, wherein assessing results in generation of a final text corpus comprising the plurality of dimensions merged with one or more new dimensions, and corresponding final reports;
performing, a weighted average mechanism of voting on the final text corpus, wherein each CFT upvotes or downvotes the dimensions and the final reports, wherein the voting results in the generation of a multidimensional space representation of the STS service with graded axes and vector representing the inputs from each member of the CFT;
reducing, the plurality of dimensions using a principal component analysis for optimizing the STS service;
reviewing and approving, the reduced plurality of dimensions by the plurality of members of the CFT using the weighted average mechanism of voting;
processing, the reduced plurality of dimensions using a multivariate regression algorithm to arrive at a set of three candidate solutions, wherein the set of three candidate solutions is represented as multivariate linear equations, wherein unit vectors and coefficients of the multivariate linear equations indicate the optimal dimensions to design the STS services; and
utilizing, the set of three candidate solutions to provide a service design blue print as an output using a pre-generated pattern language graph.
